# EUROPÄISCHE PATENTSCHRIFT

(11) **EP 3 156 682 B1**
(45) Veröffentlichungstag und Bekanntmachung des Hinweises auf die Patenterteilung: **11.01.2023**
(21) Anmeldenummer: 16002105.1
(22) Anmeldetag: 29.09.2016
(51) Int. Cl.: F16D 63/00, B60T 13/68, B60T 17/04

(54) **REIBGEHEMME MIT WEGE- UND SPERRVENTILEN**
FRICTIONAL BLOCKING DEVICE COMPRISING DIRECTIONAL AND LOCKING VALVES
DISPOSITIF D'ARRÊT À FRICTION COMPRENANT DES CLAPETS DE NON-RETOUR ET DES VANNES DE DISTRIBUTION

(30) Priorität: 06.10.2015 DE 202015006927 U
(43) Veröffentlichungstag der Anmeldung: 19.04.2017
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A2- 2 299 141
- DE-A1-102009 008 815
- DE-A1-102010 018 181
- DE-T2- 69 207 723

## Beschreibung

Die Erfindung betrifft eine Brems- und/oder Klemmvorrichtung eines an mindestens einer Führungsschiene geführten Schlittens, wobei die Brems- und/oder Klemmvorrichtung ein Gehäuse hat, wobei die Vorrichtung mindestens ein über ein Getriebe betätigbares Reibgehemme umfasst, das wenigstens ein im Gehäuse gelagertes, an die Führungsschiene anpressbares Druckstück aufweist. Dabei ist das mit Hilfe von Fremdenergie in Form von Druckluft oder Hydrauliköl bewegte Getriebe, zur Be- und zur Entlastung des Reibgehemmes, pro Be- und Entlastungsrichtung mittels mindestens einer Zylinder-Kolben-Einheit eines Stellgliedes oder eines Federspeichers, der mindestens ein Federelement umfasst, bewegbar.

Aus der DE 10 2014 014 509 A1 ist eine derartige Brems- und/oder Klemmvorrichtung bekannt. Ihre stellgliedseitigen Zylinder-Kolben-Einheiten werden über eine externe Pneumatikleitung mit Druckluft versorgt.

Die DE 10 2009 008 815 A1 beschreibt eine Brems- und/oder Klemmvorrichtung mit zwei Reibgehemmen. Eine Kombination aus einem Druckkolben und einem Federspeicher betätigt zum Bremsen oder Klemmen einen Schiebekeil, der jeweils auf einen Reibbacken wirkt. Zum Lösen des Schiebekeils werden jeweils zwei hintereinander geschaltete Druckkolben verwendet.

Der vorliegenden Erfindung liegt die Problemstellung zugrunde, eine Brems- und/oder Klemmvorrichtung zu entwickeln, die trotz kleinen Bauraumes sicher und schnell zwischen den Betriebszuständen "Reibgehemme offen" und "Reibgehemme zu" umschalten kann.

Diese Problemstellung wird mit den Merkmalen des Schutzanspruchs 1 gelöst. Dazu ist im Gehäuse mindestens ein elektrisch geschaltetes 3/2- oder 2/2- Wegeventil integriert. Pro Zylinder der jeweiligen Zylinder-Kolben-Einheit des jeweiligen Stellglieds ist im Gehäuse ein Sperrventil angeordnet, wobei das Sperrventil entweder ein Schnellentlüftungsventil oder ein Wechselventil ist. Die Druckluft oder das Hydrauliköl strömt bei geöffnetem Reibgehemmen im Gehäuse über eine Hauptzulaufbohrung, eine erste Verbindungsbohrung und eine zweite Verbindungsbohrung, um im Gehäuse vom Wegeventil über eine Arbeitsluftbohrung, Sperrventilverbindungsleitungen, den Sperrventilen und Zylinderzulaufbohrungen in die im Gehäuse liegenden Druckräume der jeweiligen Zylinder-Kolben-Einheiten zu gelangen.

Die einzelne Brems- und/oder Klemmvorrichtung umfasst mindestens ein Reibgehemme, das direkt oder über ein Getriebe betätigbar ist. Das Reibgehemme wirkt über eine Reibbacke auf eine Führungsschiene, auf der ein Maschinen- oder Messgeräteschlitten gelagert und geführt ist, der diese Vorrichtung trägt. Das einzelne Reibgehemme entwickelt seine Brems- und/oder Klemmwirkung beispielsweise durch das Freisetzen von in einem Federspeicher gespeicherter Federenergie, die über das Schiebekeilgetriebe auf die Reibbacke übertragen wird.

Das Reibgehemme kann hierbei direkt angetrieben werden, z.B. mittels einer hydraulischen Zylinder-Kolben-Einheit. Bei Stellgliedern kleinerer Schubkraft werden zwischen das Stellglied und das Reibgehemme Getriebe eingebaut. Diese können z.B. Schiebekeilgetriebe, Exzentergetriebe, Hebelgetriebe, Spindelgetriebe und dergleichen sein.

Die Führungsschienen, an denen die Reibbacken zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.

Durch die Verlagerung des Wegeventils von der Maschine in das Gehäuse der Brems- und/oder Klemmvorrichtung, wird das in den Versorgungsschläuchen und Kanälen üblicherweise vorhandene Luftvolumen, das zwischen den vorrichtungseigenen Pneumatikkolben und dem Wegeventil liegt, erheblich verkleinert. Bei der Baugröße, der im Ausführungsbeispiel beschriebenen Variante, ist das Volumen der Versorgungsschläuche - bei üblichen Längen von 0,5 bis 1,0 m - größer als die Zylindervolumen der vorrichtungseigenen Zylinder-Kolben-Einheiten der Stellglieder.

Werden die Reibgehemme über die Federspeicher geschlossen gehalten bzw. die Brems- und/oder Klemmvorrichtung an der Führungsschiene festgeklemmt, bedarf es nur einer kurzen Zeitspanne, um die Reibgehemme zu öffnen und die Führungsschiene freizugeben. Schließlich liegt die Druckluft oder das Hydrauliköl dauerhaft am Vorrichtungsgehäuse an, zumindest solange, wie die vorrichtungstragende Maschine in Betrieb ist. Nach einem Bestromen des Wegeventils - bei der sich in Betrieb befindenden Maschine - füllen sich zügig die Druckräume der Stellglieder.

Soll die geöffnete Brems- und/oder Klemmvorrichtung geschlossen werden, fällt in dem dem Wegeventil nachgeschalteten Leitungssystem der Druck ab. In der Folge öffnen die Sperrventile. Sie geben ihre Entlüftungsanschlüsse frei, womit die verbrauchte Druckluft der Zylinder-Kolben-Einheiten auf kürzestem Wege in die Umgebung abgeblasen werden. Dadurch können die Federspeicher die Reibgehemme schnell in die Brems- und Klemmstellung bewegen.

Da bei jedem Betriebswechsel der Brems- und/oder Klemmvorrichtung nicht das der Vorrichtung vorgelagerte Leitungssystem neu mit Druckluft befüllt werden muss, wird zumindest bei einem pneumatisch arbeitenden System zusätzlich die erforderliche Menge des Druckmediums reduziert.

Weitere Einzelheiten der Erfindung ergeben sich aus den Unteransprüchen. Es folgt eine Beschreibung eines schematisch dargestellten Ausführungsbeispiels.
- Figur 1:: perspektivische Ansicht einer Brems- und/oder Klemmvorrichtung;
- Figur 2:: horizontaler Längsschnitt zu Figur 1, entlang der Mittellinien der Stellglieder;
- Figur 3:: Querschnitt zu Figur 1;
- Figur 4:: horizontaler Längsschnitt zu Figur 1, in der Ebene des Wegeventils;
- Figur 5:: Längsschnitt durch das Wegeventil, vereinfacht;
- Figur 6:: Pneumatikschaltplan mit geschlossenem Wegeventil;.
- Figur 7:: Pneumatikschaltplan mit geöffnetem Wegeventil;

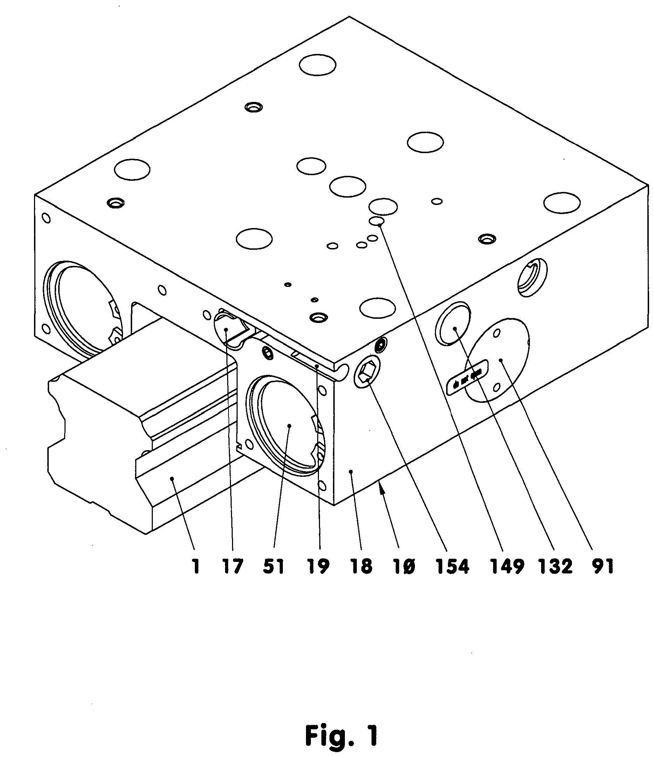

Die Figuren 1 bis 2 zeigen eine Brems- und/oder Klemmvorrichtung, wie sie beispielsweise in vielen Horizontal- oder Vertikalschlitten u.a. in Werkzeug- und Messmaschinen verwendet wird. Die Vorrichtung der vorliegenden Ausführungsform ist hierbei am entsprechenden Geräteschlitten so angeordnet, dass sie die - die Schlittenlängsführung vorgebende - Führungsschiene (1) mit jeweils zwei Reibgehemmen umgreift. Die Vorrichtung weist hier als mit Fremdenergie versorgbare Stellglieder (55, 70, 80) drei Druckkolben (56, 71, 81) auf, die bei pneumatischer oder hydraulischer Parallelschaltung koaxial zueinander angeordnet sind. Ein viertes Stellglied (50) ist ein Federspeicher.

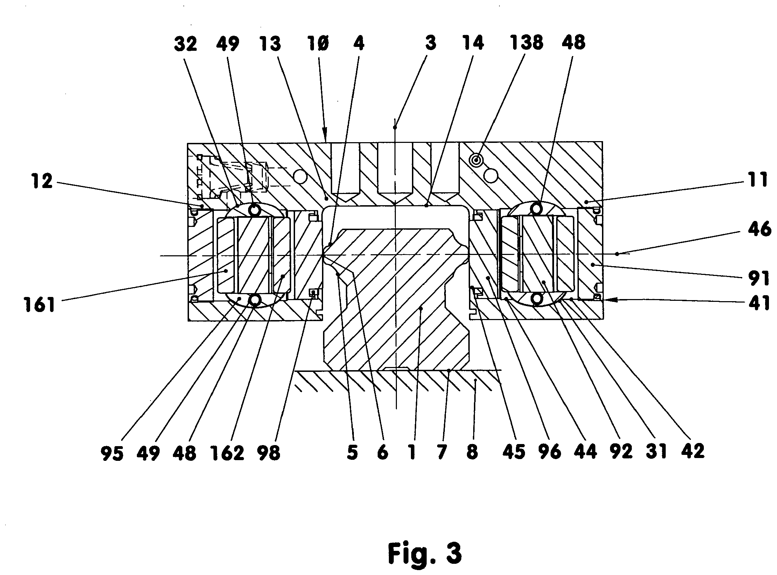

Die Figur 3 zeigt als Komplettansicht die die Führungsschiene (1) umklammernde Brems- und/oder Klemmvorrichtung. Die Führungsschiene (1) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche (7) z.B. das sie tragende Maschinenbett (8).

Zwischen den im Querschnitt der Figur 3 schräg angeordneten Kugelführungsflächen (4, 5) befindet sich hier je eine den jeweiligen Stollen seitlich begrenzende vertikale Stegfläche (6), an der sich beim Bremsen oder Klemmen die Druckstücke (96) der Reibgehemme (90) abstützen.

Die Führungsschiene (1) wird vom Gehäuse (10) der Vorrichtung beidseitig umgriffen. Im Gehäuse (10) sind zwei gegeneinander Brems- und Klemmkräfte erzeugende Vorrichtungen integriert. Das im Prinzip c-förmige Gehäuse (10) besteht aus einem Quader, der quer zu seiner Längsausdehnung eine Umgriffsnut (14) aufweist, die einen rechteckförmigen Querschnitt hat. In dem durch die Nut (14) entstandenen Freiraum ist die Führungsschiene (1) platziert. Die Nutbreite ist z.B. wenige zehntel Millimeter breiter als die Führungsschienenbreite in dem vom Gehäuse (10) umgriffenen Bereich. Die Nuttiefe entspricht z.B. 81% der Führungsschienenhöhe.

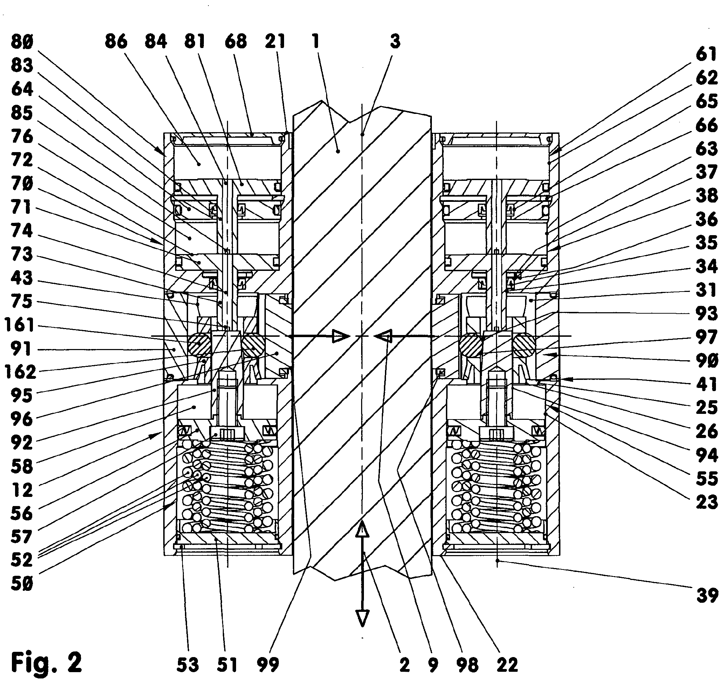

Das Gehäuse (10) hat z.B. gemäß Figur 3 - quer zur Führungslängsrichtung (2) - eine Gesamtbreite, die ca. die dreifache Breite der Führungsschiene ausmacht. Die Gesamthöhe des Gehäuses (10) beträgt z.B. 125% der Führungsschienenhöhe. Die Länge des Gehäuses (10) - in der Zeichnungsebene von Figur 2 gemessen - entspricht, ohne die in den Figuren 1 und 2 nicht dargestellten Schmutzabstreifer, beispielsweise dem dreifachen Wert der Führungsschienenhöhe aus Figur 3. Sie beträgt 105 mm.

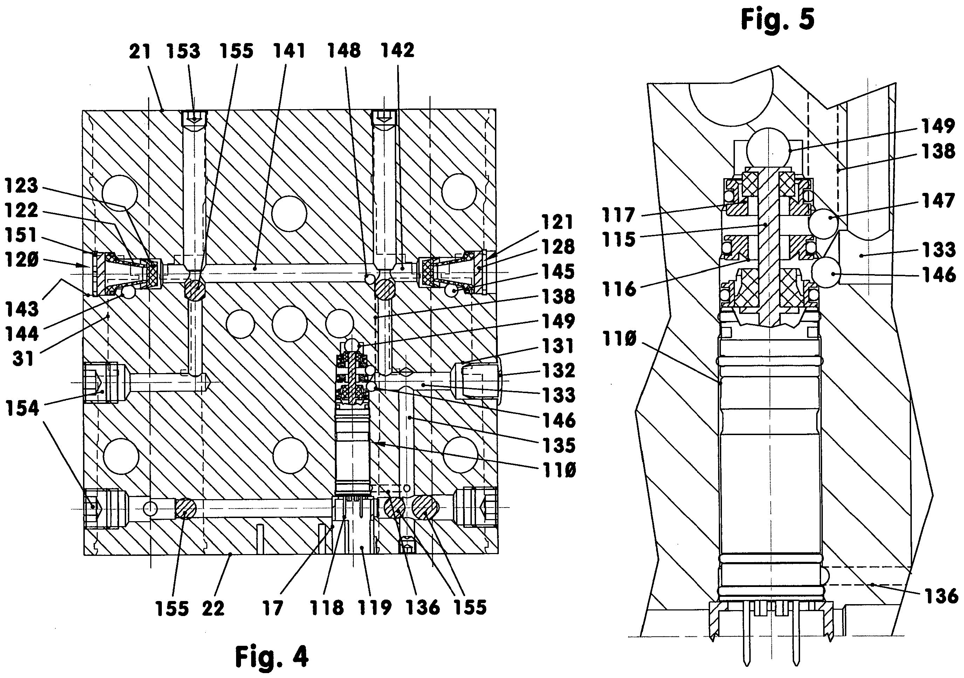

Das Gehäuse (10) hat eine rechte (11) und eine linke Gehäusezone (12). Beide Zonen (11, 12) befinden sich unterhalb einer Flanschzone (13). Jede Gehäusezone (11, 12) weist eine mehrstufige Durchgangsbohrung (23, 26, 31, 34, 38) auf, deren Mittellinie (39) parallel zur Führungslängsrichtung (2) orientiert ist, vgl. Figur 4. Die Durchgangsbohrung setzt sich aus einer Zylinderflächenbohrung (23), einer Keildurchsteckausnehmung (26), einer Käfigsitzausnehmung (31), einer Kolbenstangenbohrung (34) und einer Stufenbohrung (38) zusammen.

Die Zylinderflächenbohrung (23) endet in einem ringflächigen Grund, der Teil einer Trennwand (25) ist. Die Trennwand (25) stellt die Abtrennung zur Käfigsitzausnehmung (31) dar. An ihr stützt sich der Käfig (95) ab.

Die Käfigsitzausnehmung (31) erstreckt sich über den gesamten Bereich einer quer zur Stufenbohrung (23, 26, 31, 34, 38) vorhandenen Gehemmebohrung (41). Die Ausnehmung (31) ist ein Langloch, dessen Breite geringfügig größer ist als die eines dort eingebauten Käfigs (95). Die maximale Höhe der Ausnehmung (31) entspricht z.B. dem Durchmesser der Zylinderflächenbohrung (23). Die Ausnehmung (31) hat im Querschnitt, an den nichtgeradlinigen Flanken, eine ovale Kontur (32), die im oberen und unteren Bereich abschnittsweise der Kontur der Zylinderflächenbohrung (23) folgt.

An die Käfigsitzausnehmung (31) bzw. die Hauptbohrung (42), vgl. Figur 3, schließt sich die erheblich kleinere, kurze Kolbenstangenbohrung (34) an. Sie bildet den engsten Querschnitt der gesamten Stufenbohrung (23, 26, 31, 34, 38). In der Stangenbohrung (34) befindet sich eine Eindrehung, in der ein Dichtring (35) und eine Stützscheibe (36) mittels eines Sicherungsringes (37) gehalten werden. Die Eindrehung mündet in die hintere Stufenbohrung (38), deren Durchmesser z.B. 1 mm größer ist als der der Zylinderflächenbohrung (23). Alle Abschnitte der Stufenbohrung liegen koaxial auf der Mittellinie (39).

Die quer zur Stufenbohrung (23, 26, 31, 34, 38) verlaufende Gehemmebohrung (41) hat eine Mittellinie (46), die die Mittellinien (39) der Stufenbohrungen (38) schneidet oder in geringem Abstand kreuzt. Jede Gehemmebohrung (41) hat drei abgestufte Bereiche, vgl. Figur 3. Von der Gehäuseaußenseite her sind das eine Hauptbohrung (42), eine Druckstückführungsbohrung (44) und eine Austrittsbohrung (45). Die Hauptbohrung (42) schneidet sich mit der Käfigsitzausnehmung (31). In der Gehäusezone (12), siehe Figur 2, kann man die Durchdringungslinie (43) erkennen.

In diesem Bereich sitzt der Käfig (95), der zwei Zylinderrollen (161, 162) lagert. Beide Zylinderrollen (161, 162) liegen an einem Schiebekeil (92) eines Schiebekeilgetriebes an. Die außenliegende Zylinderrolle (161) stützt sich an einer Einstellschraube (91) ab, während die innenliegende Zylinderrolle (162) an einem hier unbelasteten Druckstück (96) anliegt.

Im Bereich der Einstellschraube (91) trägt die Hauptbohrung (42) ein Feingewinde. Die Einstellschraube (91) ist eine zylindrische Scheibe, die an der äußeren Stirnfläche Bohrungen für den Eingriff eines Zapfenschlüssels aufweist. Sie hat ein Außengewinde, das in einer Ringnut endet. In der Nut ist ein Quetschring als Schraubensicherung eingelassen.

Das Druckstück (96) ist z.B. ein zylindrischer Kolben mit einer angeformten Kolbenstange. Die Kolbenstange ragt bei betätigtem Reibgehemme (90) aus der Austrittsbohrung (45) heraus. Am Übergang der Kolbenstange zum Kolben befindet sich eine Stirnnut, in der ein elastischer Rückhubring (98) mit z.B. rechteckigem Einzelquerschnitt sitzt.

Das Druckstück (96) hat eine wenige zehntel Millimeter in die Nut (14) hineinragende Stirnfläche (97) mit der es beim Bremsen an der Führungsschiene (1) zur Anlage kommt. Die Stirnfläche (97) ist beispielsweise mit einem Reibbelag ausgestattet. Für Letzteren wird z.B. ein pulvermetallurgisch hergestellter Reibwerkstoff auf Bronzebasis verwendet. Der Reibwerkstoff kann zusätzlich keramische Bestandteile beinhalten. Ggf. ist der Reibbelag mit der Stirnfläche (97) verklebt oder verlötet.

Zwischen dem Druckstück (96) und der Einstellschraube (91) ist der Schiebekeil (92), umgeben von dem Käfig (95), angeordnet. Der Schiebekeil (92) ist ein trapezförmiger Körper mit rechteckigen Querschnitten, vgl. Figur 3, Gehäusezone (11). Er ist starr, z.B. mittels einer Schraube (57) an einem in der Zylinderflächenbohrung (23) gelagerten Primärkolben (56) befestigt. Der Schiebekeil (92), der auch die Kolbenstange des Primärkolbens (56) darstellt, hat u.a. eine Stütz- (94) und eine Keilfläche (93). Beide Flächen sind rechteckig und z.B. plan. Die jeweils dem Druckstück (96) zugewandte Keilfläche (93) schließt mit diesem z.B. einen spitzen Winkel von 1 bis 5 Winkelgraden ein. Die Stützfläche (94) verläuft parallel zur Stirnfläche der benachbarten Einstellschraube (91). Beispielsweise verjüngen sich die Querschnitte des Schiebekeils (92) linear mit zunehmendem Abstand weg von der Kolbenstangenseite des Primär-kolbens (56). Im Ausführungsbeispiel ist das erste Drittel der Länge des Schiebekeils (92) nicht abgeschrägt.

Der den Schiebekeil (92) umgebende Käfig (95) hat eine Querschnittsform, die mit Spiel in die Käfigsitzausnehmung (31) passt. Der Käfig (95) hat mittig - parallel zur Führungslängsrichtung - einen rechteckigen Durchbruch, der geringfügig größer ist als der größte Querschnitt des Schiebekeils (92). Quer zu diesem Durchbruch befindet sich außermittig ein ebenfalls rechteckiger Durchbruch. Letzterer dient der Aufnahme der Zylinderrollen (161, 162). Der Durchbruch ist um ca. 7,4% der Käfiglänge aus der Käfigmitte heraus - von der Kolbenstangenseite des Primärkolbens (56) weg - versetzt. Die Höhe des jeweiligen Durchbruchs entspricht z.B. der Länge der Zylinderrollen (161, 162). Beide Durchbrüche sind nicht höhenversetzt.

In der Zylinderflächenbohrung (23) ist an der Rückseite des Kolbens (56) der Federspeicher (50) angeordnet, der mit Vorspannung auf die Kolbenbodenseite des Primärkolbens (56) wirkt. In Figur 2 werden die Federelemente jeweils als eine Gruppe von z.B. drei ineinander gesetzten Schraubendruckfedern (52) dargestellt. Die Schraubendruckfedern haben jeweils abwechselnd entgegengesetzte Steigungen. Auch kann anstelle der Federelemente (52), zur Bildung eines alternativen Federspeichers (50), eine Tellerfedersäule, ein Tellerfederpaket oder eine Kombination aus beidem angeordnet werden.

Die Zylinderflächenbohrung (23) hat in dem Bereich, in den der Primärkolben (56) durch mindestens eine auf Block sitzende Schraubdruckfeder nicht hineinfahren kann, einen geringfügig größeren Durchmesser. Das freie Ende der Zylinderflächenbohrung (23) ist mit einem Kragendeckel (51) verschlossen, der in einer umlaufenden Ringnut einen O-Ring trägt. Der Kragendeckel (51), dessen Kragen die im Durchmesser größte Schraubendruckfeder führt, wird im Gehäuse (10) mittels eines Sicherungsringes (53) gehalten.

An der anderen Stirnseite (21) des Gehäuses (10), ist die Stufenbohrung (38) z.B. mit einem abgedichteten Einstauchdeckel (68) verschlossen. Im hinteren Bereich hat die Stufenbohrung (38) die Funktion eines Stufenzylinders (61). Letzterer hat z.B. eine zylindrische Außenkontur und einen planen Boden. Die Innenkontur des Stufenzylinders (61) setzt sich aus zwei abgestuften Kolbenlaufflächen (62, 63) zusammen. Am bundartigen Übergang der Kolbenlaufflächen (62, 63) sitzt ein dichtend eingesetzter Trennboden (64) mit zentraler Bohrung (65). Er wird in seiner Position mittels eines Sicherungsringes (66) axial gehalten. Die zentrale Bohrung (65) des Trennbodens (64) führt die Kolbenstange (83) eines Tertiärkol-bens (81). Die Bohrung (65) ist gegenüber der Tertiärkolben-stange (83) mit einem Dichtring abgedichtet. Die Kolbenstange (83) hat eine zentrale - auch den Kolben (81) durchdringende - Durchgangsbohrung (84), deren Durchmesser ca. der Hälfte des Außendurchmessers der Kolbenstange (83) entspricht. Der Durchmesser beträgt nach Figur 4 beispielsweise 2,5 mm. Der wirksame Durchmesser des Tertiärkol-bens (81) entspricht z.B. 108% des wirksamen Primärkolbendurchmessers.

In die Stirnfläche des freien Endes der Tertiärkolbenstange (83) ist eine Quernut (85) eingearbeitet, deren Querschnitt z.B. einen Quadratmillimeter beträgt, vgl. Schnitt der Gehäusezone (12) in Figur 3. Ggf. sind in die Stirnfläche mehrere Quernuten eingefräst.

Zwischen dem Tertiärkolben (81) und dem Käfig (95) ist ein Sekundärkolben (71) angeordnet. Letzterer sitzt beweglich in der Kolbenlauffläche (63) des Stufenzylinders (61). Sein wirksamer Durchmesser beträgt z.B. 104% des wirksamen Primärkolbendurchmessers. Der Kolben (71) weist an seiner Bodenseite eine Eindrehung (72) auf, deren Querschnitt etwas größer ist als der in den Zylinderraum hineinragende Querschnitt des Sicherungsringes (66). Am Sekundärkolben (71) ist ebenfalls eine Kolbenstange (73) angeformt. Auch diese Kolbenstange (73) hat eine zentrale Durchgangsbohrung (74), die ihr freies Ende mit dem der Kolbenbodenseite des Kolbens (71) verbindet. Der Durchmesser der Bohrung (74) entspricht dem der Bohrung (84). Auch die Sekundärkolbenstange (73) weist an ihrer Stirnfläche mindestens eine Quernut (75) auf. Ihr Querschnitt entspricht dem der Quernut (85).

Alle Kolben haben in ihrer zylindrischen Umfangsfläche eine Ringnut, in der jeweils mindestens ein Dichtring gelagert ist. Der Dichtring des Primärkolbens ist hier eine Lippendichtung, während z.B. die anderen Dichtungen O-Ringe mit rundem, elliptischem oder annähernd rechteckigem Querschnitt sind. Die Kolbenböden haben, sofern sie an planen Flächen anliegen, zumindest radiale Kerben bzw. Nuten, damit einströmendes Druckmittel schnell auf die jeweilige gesamte aktive Kolbenfläche wirken kann. Zur Minimierung der trägen Kolbenmasse können die Kolben an ihren Stirnflächen entsprechende Eindrehungen haben.

Als Alternative für die angeformten Kolbenstangen (73, 83) der Kolben (71, 81) kann auch eine - beide Kolben (71, 81) verbindende - Kolbenstange verwendet werden, auf der z.B. die Kolben mittels Gewinde aufgeschraubt sind. Es ist auch denkbar, die Kolbenstange (83) mit dem Sekundärkolben (71) aus einem Stück zu fertigen, den Trennboden (64) auf diese angeformte Kolbenstange aufzuschieben und abschließend den Tertiärkolben (81) auf letztere aufzuschrumpfen.

Während des Normalbetriebes - die Reibgehemme (90) sind offen, bremsen oder klemmen also nicht - des die Vorrichtung tragenden Schlittens wird eine im Gehäuse (10) liegender Hauptzulaufbohrung (133) mit Druckluft versorgt. Die Hauptzulaufbohrung (133) mündet in den Gehäusezonen (11, 12) in die jeweiligen Hauptbohrungen (42), vgl. Figur 3. Die Druckluft gelangt von dort aus - vgl. Figur 4, Gehäusezone (12) - u.a. über den Spalt zwischen dem Käfig (95) und der Käfigsitzausnehmung (31) in die Druckräume (58, 76, 86).

Der Primärkolben (56) liegt an den zum Teil auf Block sitzenden Schraubendruckfedern (52) als Anschlag an. Der Schiebekeil (92) befindet sich in seiner hinteren Position. Die Zylinderrollen (161, 162) sitzen unbelastet im Käfig (95). Der einzelne Käfig (95) wird jeweils von zwei Schraubenfedern (49), die in den Käfigbohrungen (48) eingesteckt sind und sich am Boden der Käfigsitzausnehmung (31) abstützen, gegen die Trennwand (25) gedrückt. Das jeweilige Druckstück (96) liegt bei weitgehend entlastetem, aber dennoch dichtenden Rückhubring (98) in der Regel nicht an der Führungsschiene (1) an. Der Rückhubring (98) hat noch mindestens so viel Vorspannung, dass das Druckstück (96), die Zylinderrollen (161, 162) und der Schiebekeil (92) spielfrei an der Einstellschraube (91) anliegen.

Am freien Ende des Schiebekeils (92) liegt das freie Ende der Kolbenstange (73) des Sekundärkolbens (71) an. Über die dortige Quernut (75) steht die Druckluft in der Durchgangsbohrung (74) und dem zwischen dem Sekundärkolben (71) und dem Trennboden (64) gelegenen Druckraum (76) an. Direkt auf dem Sekundärkolben (71) stützt sich der Tertiärkolben (81) mit seiner hohlen Kolbenstange (83) ab. Auch hier liegt über die Durchgangsbohrung (84) Druckluft in dem zwischen dem Tertiärkolben (81) und dem Boden des Stufenzylinders (61) gelegenen Druckraum (86) an.

Die an allen drei sich gegeneinander abstützenden Kolben (56, 71, 81) anstehende Druckluft hält die als Federspeicher (50) dienenden Schraubendruckfedern (52) unter Spannung.

Fällt nun in den Stellgliedern (55, 70, 80) die Druckluft ab, unabhängig davon, ob eine Systemstörung vorliegt, ein Bremsvorgang eingeleitet werden soll oder ob nur der Schlitten festgeklemmt oder geparkt werden soll, schiebt die jeweiligen Schraubendruckfedern (52) den Schiebekeil (92) über den Primärkolben (56) in die Käfigsitzausnehmung (31) hinein. Der Schiebekeil (92) schiebt dabei die Kolben (71, 81) über ihre Kolbenstangen (73, 83) vor sich her. Im Bereich der Gehemmebohrung (41) legen sich mit zunehmendem Schiebekeilhub die Flächen (93, 94) an den im Käfig (95) geführten Zylinderrollen (161, 162) spielfrei an. Die außenliegende Zylinderrolle (161) stützt den Schiebekeil (92) an der Einstellschraube (91) ab, während die innenliegende Zylinderrolle (162) das Druckstück (96) gegen den Widerstand des Rückhubringes (98) gegen die Stegfläche (6) schiebt.

Die Zylinderrollen (161, 162) wälzen nun zwischen den Bauteilen (91, 92, 96) so lange ab, bis sich im Ausführungsbeispiel ein Kräftegleichgewicht zwischen der Federkraft des Gehäuses (10) und der Federkraft des Federelements (52) eingestellt hat. Dann haben die beiden Reibgehemme (90) ihre maximale Klemmkraft erreicht. Die Druckstücke (96) liegen an den Stegflächen (6) der Führungsschiene (1) an. Die für den Rückhub der Druckstücke (96) zuständigen Rückhubringe (98) sind vorgespannt elastisch verformt.

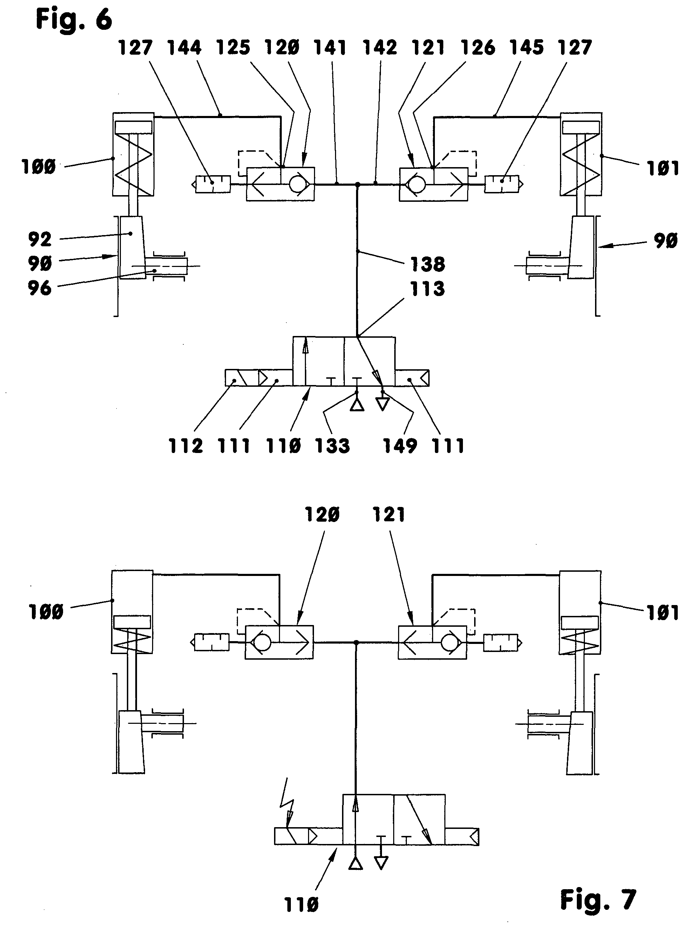

Die Figuren 6 und 7 zeigen einen Pneumatikschaltplan mit den beiden vereinfacht dargestellten Reibgehemmen (90). Der jeweils einfachwirkende Zylinder (100) und (101) mit Federrückhub repräsentiert pro Gehäusezone (11, 12) die pneumatischen Stellglieder (55, 70, 80) und den Federspeicher (50).

Um die Zylinder (100, 101) pneumatisch anzusteuern, ist ihnen ein 3/2-Wegeventil (110) vorgeschaltet. Das Wegeventil (110) mit Sperr-Ruhestellung ist z.B. beidseitig vorgesteuert (111) und durchflussseitig durch einen Elektromagnet (112) oder einen elektromechanischen Antrieb betätigbar.

An dem wegeventilseitigen Arbeitsanschluss (113) startet eine sich verzweigende Leitung (138, 141, 142), von der je ein Zweig (141, 142) zu je einem zwischen dem Wegeventil (110) und einem Zylinder (100, 101) gelegenen Sperrventil (120, 121) führt.

Die Sperrventile (120, 121) sind beispielsweise Schnellentlüftungsventile, bei denen - bei entlüfteter Eingangsleitung - ins Freie entlüftet wird. Die Entlüftung erfolgt beispielsweise über ein Sieb (128) oder einen Geräuschdämpfer (127). Vom mittigen Arbeitsanschluss des jeweiligen Sperrventils (120, 121) führt eine Leitung (144, 145) zum kolbenbodenseitigen Anschluss des jeweiligen Zylinders (100, 101).

Selbstverständlich kann das einzelne Sperrventil (120, 121) auch durch zwei an ihren Arbeitsanschlüssen zusammengeschaltete Rückschlagventile ersetzt werden. Zumindest eines der beiden Rückschlagventile kann dabei nach DIN ISO 1219-1 unbelastet sein.

Die Figur 4 zeigt einen Horizontalschnitt des Gehäuses (10) in der Höhe der meisten druckluftführenden Bohrungen (133, 135, 141, 142). In der Stirnseite (22) des Gehäuses (10) befindet sich z.B. eine mehrfach gestufte Sacklochbohrung (17), in der das Wegeventil (110) als Patronenventil eingebaut ist. Das Ventil (110) hat hier einen Maximaldurchmesser von 8 mm. Im Bereich der Stirnseite (22) befindet sich vor dem Ventil (110) eine Isolierhülse (119), in die die Anschlussstifte (118) des Ventils (110) hineinragen.

Der vordere Bohrungsbereich der gehäuseseitigen Bohrung (17) mündet in einen zur Stirnfläche (22) hin seitlich offenen Querkanal (19), der die Sacklochbohrung (17) mit der seitlichen Wandung (18) so verbindet, dass nach dem Aufstecken einer Anschlussbuchse auf die ventilseitigen Anschlussstifte (118) das elektrische Versorgungskabel seitlich aus dem Gehäuse (10) herausführbar ist.

Das elektrisch betätigbare Patronenventil (110) hat beispielsweise in seinem vorderen Bereich einen federbelasteten Hubmagnet (112), der auf das Stellglied (115), vgl. Figur 5, wirkt. Bei unbestromtem Patronenventil (110) liegt das Stellglied (115) dicht auf einem Zulaufsitz (116) auf. Die an der Hauptzulaufbohrung (133) anstehende Druckluft gelangt nicht zu den Zylindern (100, 101). Das Stellglied (115) kontaktiert nicht den Ablaufsitz (117), so dass die in den gehäuseeigenen Bohrungen vorhandene Druckluft über eine in die Oberseite des Gehäuses (10) mündende Entlüftungsbohrung (149) entweichen kann.

Wird das Ventil (110) bestromt, bewegt sich das Ventilglied (115) - angezogen vom Hubmagnet (112) - in die in Figur 5 dargestellte Position. Das Ventilglied (115) gibt den Zulaufsitz (116) frei. Die Druckluft strömt über die Hauptzulaufbohrung (133), die Verbindungsbohrung (146) in die Verbindungsbohrung (147), um über die Arbeitsluftbohrung (138), die Sperrventilverbindungsleitung (141, 142) und die Zylinderzulaufbohrungen (144, 145) in die Druckräume (58, 76, 86) zu gelangen. Dabei passiert die Druckluft die Sperrventile (120, 121) ungehindert. Die Reibgehemme (90) werden geöffnet. Zugleich wird die Entlüftungsleitung (149) durch das dichtende Aufsitzen des Ventilglieds (115) auf den Ablaufsitz (117) verschlossen.

Zum Bremsen und anschließenden Festklemmen der Vorrichtung an der Führungsschiene (1) wird die Bestromung des Patronenventils (110) gestoppt. Die Unterbrechung der Stromzufuhr kann auch durch ein Notaus-Befehl der Maschine oder durch einen Stromausfall herbeigeführt sein.

Das Wegeventil (110) schließt. Die Druckluftzufuhr zu den Druckräumen (58, 76, 86) bzw. zu den Zylindern (100, 101) ist unterbrochen. Die Federelemente (52) der Federspeicher (50) schieben die Kolben (56, 71, 81) in ihre jeweils entgegengesetzte Endlage. Dabei wird die in den Druckräumen (58, 76, 86) vorhandene Druckluft nicht über das Wegeventil (110), sondern über die Sperrventile (120, 121) entlüftet. Beim Entlüften hebt im Sperrventil (120, 121) das Sperrglied (123) vom der sperrventileigenen Sitzhülse (122) ab. Da die Sperrventile als Schnellentlüftungsventile (120, 121) jeweils in unmittelbarer Nähe der Druckräume angeordnet sind und die Ventilsitzbohrungen (143) direkt in die Seitenwandungen des Gehäuses (10) münden, vgl. Figuren 1, 3 und 4, kann die aus den Druckräumen ausströmende Luft unmittelbar - auf kürzestem Weg - ins Freie gelangen.

Im Ausführungsbeispiel sitzt das einzelne Sperrventil (120, 121) zusammen mit einem Entlüftungssieb (128) in einer Ventilsitzbohrung (143). Letztere fluchtet mit den Sperrventilverbindungsleitungen (141, 142). In der jeweiligen Ventilsitzbohrung (143) werden das Sieb (128) und das Sperrventil (120, 121) über eine Sicherungsring (151) gehalten. Hier beträgt der Abstand des Sperrventils (121) zur Seitenwand (18) des Gehäuses (10) z.B. 5,4 mm. Der Abstand zwischen der Käfigsitzausnehmung (31), die als eine zwischen den Druckräumen (58, 76, 86) gelegene Verbindungsausnehmung dient, beträgt 3,7 mm. Beide Abstände sind kleiner als die Hälfte des maximalen Durchmessers des jeweiligen Sperrventils (120, 121).

Die Mittellinien aller in Figur 4 gezeigten längs und quer verlaufenden Bohrungen, z.B. die Bohrung (133, 141, 142), sofern die Bohrungen nicht gestrichelt oder im Querschnitt dargestellt sind, liegen in der figureneigenen Zeichnungsebene. Alle druckluftführenden Bohrungen oder Kanäle können funktionsbedingt auch als Leitungen bezeichnet sein oder werden.

### Bezugszeichenliste:

- 1: Führungsschiene, doppeltrapezförmig
- 2: Führungslängsrichtung, Mittellinie
- 3: vertikale Mittelebene
- 4, 5: Kugelführungsflächen
- 6: Stegfläche
- 7: Bodenfläche
- 8: Maschinenbett
- 9: Zustellbewegungsrichtung, Kraftrichtung

- 10: Gehäuse
- 11: Gehäusezone, rechts
- 12: Gehäusezone, links
- 13: Flanschzone
- 14: Umgriffsnut
- 17: Sacklochbohrung für (110), mehrfach gestuft
- 18: Wandung, seitlich
- 19: Querkanal für Sensorkabelführung

- 21: Stirnflächen, Stirnseite
- 22: Stirnflächen, Stirnseite, federseitig
- 23: Zylinderflächenbohrung
- 25: Trennwand
- 26: Keildurchsteckausnehmung

- 31: Käfigsitzausnehmung, Ausnehmung
- 32: Kontur
- 34: Kolbenstangenbohrung, Stangenbohrung
- 35: Dichtring
- 36: Stützscheibe
- 37: Sicherungsring
- 38: Stufenbohrung
- 39: Mittellinie

- 41: Gehemmebohrung
- 42: Hauptbohrung
- 43: Durchdringungslinie
- 44: Druckstückführungsbohrung
- 45: Austrittsbohrung
- 46: Mittellinie
- 48: Käfigbohrungen
- 49: Schraubenfedern

- 50: Federspeicher, Stellglied, Federsystem
- 51: Kragendeckel
- 52: Federelemente, Schraubendruckfedern, Federn
- 53: Sicherungsring

- 55: Stellglied, fremdenergieangetrieben
- 56: Primärkolben
- 57: Schraube
- 58: Druckraum

- 61: Stufenzylinder
- 62: Kolbenlauffläche in Bodennähe
- 63: Kolbenlauffläche in Randnähe
- 64: Trennboden
- 65: Bohrung
- 66: Sicherungsring
- 68: Einstauchdeckel

- 70: Stellglied, fremdenergieangetrieben
- 71: Sekundärkolben
- 72: Eindrehung
- 73: Sekundärkolbenstange, Kolbenstange
- 74: Durchgangsbohrung, zentral
- 75: Quernut
- 76: Druckraum

- 80: Stellglied, fremdenergieangetrieben
- 81: Tertiärkolben
- 83: Tertiärkolbenstange, Kolbenstange
- 84: Durchgangsbohrung, zentral
- 85: Quernut
- 86: Druckraum

- 90: Reibgehemme
- 91: Einstellschraube
- 92: Schiebekeil, Getriebeteil
- 93: Keilfläche
- 94: Stützfläche
- 95: Käfig
- 96: Druckstück, Gegenstück, Getriebeteil, Reibbacke
- 97: Stirnfläche
- 98: Rückhubring, elastisch
- 99: Rand des Druckstücks (96)

- 100, 101: Zylinder, einfachwirkend

- 110: Wegeventil, 3/2-Wegeventil
- 111: pneumatische Vorsteuerung, beidseitig
- 112: Elektromagnet, Hubmagnet
- 113: Arbeitsanschluss an (110)
- 115: Ventilglied von (110)
- 116: Zulaufsitz
- 117: Ablaufsitz
- 118: Anschlussstifte
- 119: Isolierhülse

- 120, 121: Sperrventile, Schnellentlüftungsventile
- 122: Sitzhülse
- 123: Sperrglied
- 125, 126: Arbeitsanschlüsse
- 127: Geräuschdämpfer, Entlüftung
- 128: Sieb, Entlüftung, Entlüftungssieb

- 131: Druckanschluss
- 132: Schutzkappe für Transport
- 133: Hauptzulaufbohrung
- 135: Vorsteuerlängsbohrung
- 136: Vorsteuerquerbohrung, gestrichelt
- 138: Arbeitsluftbohrung, gestrichelt

- 141: Sperrventilverbindungsleitung, links
- 142: Sperrventilverbindungsleitung, rechts
- 143: Ventilsitzbohrung
- 144: Zylinderzulaufbohrung, links, senkrecht
- 145: Zylinderzulaufbohrung, rechts, senkrecht
- 146: Verbindungsbohrung zwischen (17) und (133), senkrecht
- 147: Verbindungsbohrung zwischen (17) und (138), senkrecht
- 148: Verbindungsbohrung zwischen (138) und (141, 142), senkrecht
- 149: Ventilentlüftungsbohrung für (110)

- 151: Sicherungsring
- 153: Gewindestopfen, klein
- 154: Gewindestopfen, groß
- 155: Verstemmkugeln

- 161: Zylinderrolle, außenliegend
- 162: Zylinderrolle, innenliegend, Getriebeteil

## Patentansprüche

1. Brems- und/oder Klemmvorrichtung eines an mindestens einer Führungsschiene (1) geführten Schlittens,
- wobei die Brems- und/oder Klemmvorrichtung ein Gehäuse (10) hat,
- wobei die Vorrichtung mindestens ein über ein Getriebe (92, 162, 96) betätigbares Reibgehemme (90) umfasst, das wenigstens ein im Gehäuse (10) gelagertes, an die Führungsschiene (1) anpressbares Druckstück (96) aufweist,
- wobei das mit Hilfe von Fremdenergie in Form von Druckluft oder Hydrauliköl bewegte Getriebe (92, 162, 96), zur Be- und zur Entlastung des Reibgehemmes (90), pro Be- und Entlastungsrichtung mittels mindestens einer Zylinder-Kolben-Einheit eines Stellgliedes (55, 70, 80) oder eines Federspeichers (50), der mindestens ein Federelement (52) umfasst, bewegbar ist,
**dadurch gekennzeichnet,**
- **dass** im Gehäuse (10) mindestens ein elektrisch geschaltetes 3/2 oder 2/2 Wegeventil (110) integriert ist,
- **dass** pro Zylinder (100, 101) der jeweiligen Zylinder-Kolben-Einheit des jeweiligen Stellglieds (55, 70, 80) ein Sperrventil (120, 121) im Gehäuse (10) angeordnet ist, wobei das Sperrventil (120, 121) entweder ein Schnellentlüftungsventil oder ein Wechselventil ist und
- **dass** die Druckluft oder das Hydrauliköl bei geöffnetem Reibgehemmen (90) im Gehäuse (10) über eine Hauptzulaufbohrung (133), eine erste Verbindungsbohrung (146) und eine zweite Verbindungsbohrung (147) strömt, um im Gehäuse (10) vom Wegeventil (110) über eine Arbeitsluftbohrung (138), Sperrventilverbindungsleitungen (141, 142), den Sperrventilen (120, 121) und Zylinderzulaufbohrungen (144, 145) in die im Gehäuse (10) liegenden Druckräume (58, 76, 86) der jeweiligen Zylinder-Kolben-Einheiten zu gelangen.

2. Brems- und/oder Klemmvorrichtung gemäß Anspruch 1, **dadurch gekennzeichnet, dass** das Wegeventil (110) eine Sperr-Ruhestellung hat.

3. Brems- und/oder Klemmvorrichtung gemäß Anspruch 1, **dadurch gekennzeichnet, dass** das Wegeventil (110) beidseitig pneumatisch oder hydraulisch vorgesteuert ist.

4. Brems- und/oder Klemmvorrichtung gemäß Anspruch 1, **dadurch gekennzeichnet, dass** das Wegeventil (110) ein Patronenventil ist.

5. Brems- und/oder Klemmvorrichtung gemäß Anspruch 1, **dadurch gekennzeichnet, dass** das jeweilige Sperrventil (120, 121) ein Schnellentlüftungsventil ist.

6. Brems- und/oder Klemmvorrichtung gemäß Anspruch 5, **dadurch gekennzeichnet, dass** das jeweilige Schnellentlüftungsventil (120, 121) zwischen den Druckräumen (58, 76, 86) der Stellglieder (55, 70, 80) angeordnet ist.

7. Brems- und/oder Klemmvorrichtung gemäß Anspruch 6, **dadurch gekennzeichnet, dass** die am Arbeitsanschluss (125, 126) des jeweiligen Schnellentlüftungsventils (120, 121) angeschlossene Zylinderzulaufbohrung (144, 145) oder Zylinderzulaufleitung kürzer ist, als die Hälfte des maximalen Durchmessers des jeweiligen Sperrventils (120, 121).

8. Brems- und/oder Klemmvorrichtung gemäß Anspruch 6, **dadurch gekennzeichnet, dass** der ins Freie führende Entlüftungsanschluss des jeweiligen Schnellentlüftungsventils (120, 121) der äußeren Wandung des Gehäuses (10) räumlich näher ist, als eine Strecke, die kürzer ist als die Hälfte des maximalen Durchmessers des jeweiligen Sperrventils (120, 121).

9. Brems- und/oder Klemmvorrichtung gemäß Anspruch 1, **dadurch gekennzeichnet, dass** zumindest eines der Sperrventile (120, 121) durch zwei an ihren Arbeitsanschlüssen zusammengeschaltete Rückschlagventile ersetzbar ist.

10. Mess- oder Werkzeugmaschine mit einer Führungsschiene (1) und mit einem an der Führungsschiene (1) geführten Schlitten in der Bauform eines Horizontal- oder Vertikalschlittens,
wobei der Schlitten eine Brems- und/oder Klemmvorrichtung nach Anspruch 1 hat, die die Führungsschiene (1) mit zwei Reibgehemmen (90) umgreift.

## Claims

1. A braking and/or clamping device of a slide guided on at least one guide rail (1),
- wherein the braking and/or clamping device has a housing (10),
- wherein the device comprises at least one frictional blocking device (90), which can be actuated via a gearing mechanism (92, 162, 96) and has at least one pressure piece (96) which is mounted in the housing (10) and can be pressed against the guide rail (1),
- wherein the gearing mechanism (92, 162, 96), which is moved with the aid of external energy in the form of compressed air or hydraulic oil, is movable, for loading and unloading the frictional blocking device (90), by means of at least one cylinder-piston unit of an actuator (55, 70, 80) or a spring energy store (50) comprising at least one spring element (52), per loading and unloading direction,
**characterised in that**
- at least one electrically switched 3/2- or 2/2-way directional valve (110) is integrated in the housing (10),
- one check valve (120, 121) is arranged in the housing (10) for each cylinder (100, 101) of the respective cylinder-piston unit of the respective actuator (55, 70, 80), wherein the check valve (120, 121) is either a quick-vent valve or a shuttle valve, and
- the compressed air or the hydraulic oil flows via a main inflow bore (133), a first connecting bore (146) and a second connecting bore (147) in the housing (10) when the frictional blocking device (90) is open in order to pass in the housing (10) from the directional valve (110) via a working air bore (138), check valve connecting lines (141, 142), the check valves (120, 121) and cylinder inflow bores (144, 145) into the pressure chambers (58, 76, 86), situated in the housing (10), of the respective cylinder-piston units.

2. The braking and/or clamping device according to Claim 1, **characterised in that** the directional valve (110) has a blocking rest position.

3. The braking and/or clamping device according to Claim 1, **characterised in that** the directional valve (110) is pneumatically or hydraulically pilot-controlled on both sides.

4. The braking and/or clamping device according to Claim 1, **characterised in that** the directional valve (110) is a cartridge valve.

5. The braking and/or clamping device according to Claim 1, **characterised in that** the respective check valve (120, 121) is a quick-vent valve.

6. The braking and/or clamping device according to Claim 5, **characterised in that** the respective quick-vent valve (120, 121) is arranged between the pressure chambers (58, 76, 86) of the actuators (55, 70, 80).

7. The braking and/or clamping device according to Claim 6, **characterised in that** the cylinder inflow bore (144, 145) or cylinder inflow line connected to the working port (125, 126) of the respective quick-vent valve (120, 121) is shorter than half the maximum diameter of the respective check valve (120, 121).

8. The braking and/or clamping device according to Claim 6, **characterised in that** the venting port, leading into the open, of the respective quick-vent valve (120, 121) is spatially closer to the outer wall of the housing (10) than a distance which is shorter than half the maximum diameter of the respective check valve (120, 121) .

9. The braking and/or clamping device according to Claim 1, **characterised in that** at least one of the check valves (120, 121) can be replaced by two non-return valves connected together at their working ports.

10. A measuring machine or machine tool having a guide rail (1) and a slide in the form of a horizontal or vertical slide guided on the guide rail (1),
wherein the slide has a braking and/or clamping device according to Claim 1, which fits around the guide rail (1) with two frictional blocking devices (90).

## Revendications

1. Dispositif de freinage et/ou de serrage d'un chariot guidé sur au moins un rail de guidage (1),
- le dispositif de freinage et/ou de serrage ayant un carter (10),
- le dispositif comportant au moins un dispositif d'arrêt à friction (90), susceptible d'être actionné par l'intermédiaire d'une transmission (92, 162, 96), qui comporte une pièce de pression (96) logée dans le carter (10), susceptible d'être pressée contre le rail de guidage (1),
- la transmission (92, 162, 96), déplacée à l'aide d'une énergie exogène sous la forme d'air comprimé ou d'huile hydraulique, pour charger et décharger le dispositif d'arrêt à friction (90), étant déplaçable pour chaque direction de charge et de décharge au moyen d'au moins une unité piston-cylindre d'un actionneur (55, 70, 80) ou d'un accumulateur à ressort (50), qui comprend au moins un élément à ressort (52),
**caractérisé**
- **en ce que** dans le carter (10) est intégrée au moins une soupape (110) à 3/2 voies ou à 2/2 voies (110) à commutation électrique,
- **en ce que** pour chaque cylindre (100, 101) de l'unité piston-cylindre respective de l'actionneur (55, 70, 80) concerné, une soupape d'arrêt (120, 121) est placée dans le carter (10), la soupape d'arrêt (120, 121) étant soit une soupape de purge rapide ou une soupape sélectrice, et
- **en ce que** lorsque le dispositif d'arrêt à friction (90) est ouvert, l'air comprimé ou l'huile hydraulique s'écoule dans le carter (10) par l'intermédiaire d'un perçage principal d'entrée (133), d'un premier perçage de liaison (146) et d'un deuxième perçage de liaison (147), pour arriver dans le carter (10) de la soupape à voies (110) par l'intermédiaire d'un perçage d'air de process (138), de conduites de liaison (141, 142), des soupapes d'arrêt (120, 121) et de perçages d'entrée (144, 145) de cylindre dans les espaces sous pression (58, 76, 86) des unités pistons-cylindres respectives situés dans le carter (10).

2. Dispositif de freinage et/ou de serrage selon la revendication 1, **caractérisé en ce que** la soupape à voies (110) dispose d'une position de blocage au repos.

3. Dispositif de freinage et/ou de serrage selon la revendication 1, **caractérisé en ce que** la soupape à voies (110) est assistée des deux côtés par voie pneumatique ou hydraulique.

4. Dispositif de freinage et/ou de serrage selon la revendication 1, **caractérisé en ce que** la soupape à voies (110) est une soupape à cartouche.

5. Dispositif de freinage et/ou de serrage selon la revendication 1, **caractérisé en ce que** la soupape d'arrêt (120, 121) respective est une soupape de purge rapide.

6. Dispositif de freinage et/ou de serrage selon la revendication 5, **caractérisé en ce que** la soupape de purge rapide (120, 121) respective est placée entre les espaces sous pression (58, 76, 86) des actionneurs (55, 70, 80).

7. Dispositif de freinage et/ou de serrage selon la revendication 6, **caractérisé en ce que** le perçage d'entrée (144, 145) de cylindre ou la conduite d'entrée de cylindre raccordé(e) sur le raccordement de process (125, 126) de la soupape de purge rapide (120, 121) respective est plus court(e), que la moitié du diamètre maximum de la soupape d'arrêt (120, 121) respective.

8. Dispositif de freinage et/ou de serrage selon la revendication 6, **caractérisé en ce que** le raccord de purge mené à l'air libre de la soupape de purge rapide (120, 121) respective est physiquement plus proche de la paroi extérieure du carter (10) qu'un trajet qui est plus court que la moitié du diamètre maximum de la soupape d'arrêt (120, 121) respective.

9. Dispositif de freinage et/ou de serrage selon la revendication 1, **caractérisé en ce qu'**au moins l'une des soupapes d'arrêt (120, 121) est remplaçable par deux soupapes anti-retour commutées sur leurs raccordements de process.

10. Machine à mesurer ou machine-outil, pourvue d'un rail de guidage (1) et pourvue d'un chariot guidé sur le rail de guidage (1) du type d'un chariot horizontal ou vertical,
le chariot disposant d'un dispositif de freinage et/ou de serrage selon la revendication 1, qui enserre le rail de guidage (1) avec deux dispositifs d'arrêt à friction (90).
